# EUROPÄISCHE PATENTSCHRIFT

(11) **EP 1 484 973 B1**
(45) Veröffentlichungstag und Bekanntmachung des Hinweises auf die Patenterteilung: **09.05.2012**
(21) Anmeldenummer: 03708204.7
(22) Anmeldetag: 10.03.2003
(51) Int. Cl.: A01N 47/24, A01N 43/56, A01N 43/653, A01N 43/54, A01N 43/40, A01N 37/50, A01N 37/36

(54) **VERFAHREN ZUR IMMUNISIERUNG VON PFLANZEN GEGEN BAKTERIOSEN**
METHOD FOR IMMUNIZING PLANTS AGAINST BACTERIOSES
PROCEDE D'IMMUNISATION DE VEGETAUX CONTRE DES BACTERIOSES

(30) Priorität: 11.03.2002 DE 10210473; 13.02.2003 US 447096 P
(43) Veröffentlichungstag der Anmeldung: 15.12.2004
(73) Patentinhaber: BASF SE, 67056 Ludwigshafen (DE)
(72) Erfinder: KÖHLE, Harald, 67273 Bobenheim (DE); CONRATH, Uwe, 66459 Kirkel 1 (DE); HERMS, Stefan, 67659 Kaiserslautern (DE); SCHLUNDT, Troy, Turlock, CA 95382 (US); JOHNSON, Neil, Cashmere, WA 98815 (US); STAMMLER, Gerd, 69221 Dossenheim (DE)
(86) Internationale Anmeldenummer: PCT/EP2003/002420
(87) Internationale Veröffentlichungsnummer: WO 2003/075663

(56) Entgegenhaltungen:
- WO-A-00/78732
- WO-A-01/82701
- S. HERMS, K. SEEHAUS, H. KOEHLE & U. CONRATH: "A strobilurin fungicide enhances the resistance of tobacco against Tobacco Mosaic Virus and Pseudomonas syringae pv tabaci." PLANT PHYSIOLOGY, Bd. 130, September 2002 (2002-09), Seiten 120-127, XP002241578
- DATABASE CABA [Online] CAB INT.; 2003 J. SOBOLEWSKI & J. ROBAK: "New fungicides used for complex control of diseases on tomato growing in the field and in the greenhouse" Database accession no. 2003:69833 XP002241579 & J. SOBOLEWSKI & J. ROBAK: "Idem" PROGRESS IN PLANT PROTECTION, Bd. 42, Nr. 2, 2002, Seiten 790-792, Poznan

## Beschreibung

Die vorliegende Erfindung betrifft ein Verfahren zur Immunisierung von Pflanzen gegen Bakteriosen, welches dadurch gekennzeichnet ist, daß man die Pflanzen, den Boden oder Saatgüter mit einer wirksamen Menge einer Verbindung der Formel I 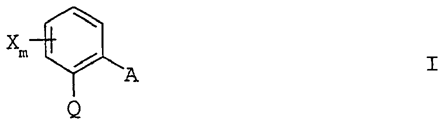 worin
- X: Halogen, C₁-C₄-Alkyl oder Trifluormethyl;
- m: 0 oder 1;
- Q: C(=CH-CH₃)-COOCH₃, C(=CH-OCH₃)-COOCH₃, C(=N-OCH₃)-CONHCH₃, C(=N-OCH₃)-COOCH₃ oder N(-OCH₃)-COOCH₃;
- A: -O-B, -CH₂O-B, -CH₂S-B, -OCH₂-B, -CH=CH-B, -C≡C-B, -CH₂O-N=C(R¹)-B oder -CH₂O-N=C(R¹)-C(R²)=N-OR³, wobei
B Phenyl, Naphthyl, 5-gliedriges oder 6-gliedriges Hetaryl oder 5-gliedriges oder 6-gliedriges Heterocyclyl, enthaltend ein bis drei N-Atome und/oder ein O- oder S-Atom oder ein oder zwei O- und/oder S-Atome, wobei die Ringsysteme unsubstituiert oder substituiert sind durch einen bis drei Reste R^{a}:
R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkyl-sulfoxyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-Alkyl-amino, C₁-C₆-Alkylaminocarbonyl, Di-C₁-C₆-Alkylamino-carbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, C(=NOR^{α})-OR^{β} oder OC(R^{α})₂-C(R^{β})=NOR^{β}
wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₃-C₆-Cycloalkyl, C₁-C₆-Alkoxy, C₁-C₆-Halogen-alkoxy, C₁-C₆-Alkoxycarbonyl, C₁-C₆-Alkylthio, C₁-C₆-Alkylamino, Di-C₁-C₆-alkylamino, C₁-C₆-Al-kylaminocarbonyl, Di-C₁-C₆-alkylaminocarbonyl, C₁-C₆-Alkylaminothiocarbonyl, Di-C₁-C₆-alkyl-aminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5- oder 6-gliedriges Hetaryl, 5- oder 6-gliedriges Hetaryloxy oder C(=NOR^{α})-OR^{β};
R^{α},R^{β} Wasserstoff oder C₁-C₆-Alkyl;
- R¹: Wasserstoff, Cyano, C₁-C₄-Alkyl, C₁-C₄-Halogenalkyl, C₃-C₆-Cycloalkyl, C₁-C₄-Alkoxy;
- R²: Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a}, C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(R^{α})=NOR^{β}, wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkyloxy, 5- oder6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
- R³: Wasserstoff, C₁-C₆-Alkyl, C₂-C₆-Alkenyl, C₂-C₆-Alkinyl, wobei die Kohlenwasserstoffreste dieser Gruppen unsubstituiert oder substituiert sind durch einen bis drei Reste R^{c};
bedeuten,
behandelt, die von den Pflanzen oder Saatgütern aufgenommen wird. Daneben berifft die Erfindung generell die Verwendung der Verbindungen der Formel I zur Immunisierung von Pflanzen gegen Bakteriosen.

Bakterien treten vorzugsweise in gemäßigten und feucht-warmen Klimagebieten als Erreger von Krankheiten (Bakteriosen) in zahlreichen Kulturpflanzen auf. Durch diese Krankheiten entsteht mitunter hoher wirtschaftlicher Schaden. Allgemein bekannt sind beispielsweise das durch verschiedene *Erwinia*-Arten hervorgerufene Absterben ganzer Obstanlagen ("Feuerbrand" bei Birne und Apfel), sowie die Naßfäulen an Kartoffeln und vielen anderen Pflanzen, verschiedene von Agrobakterien ausgelösten Pflanzentumoren und die von *Xanthomonaden* verursachten Nekrosen an verschiedenen Gemüsearten, Reis, Weizen und Zitrusfrüchten. Besonders gefürchtet sind die von *Pseudomonaden* verursachten Bakteriosen insbesondere in Gemüse, Obstgehölzen und Tabak.

Herkömmliche Fungizide, die in pilzspezifische Stoffwechselvorgänge eingreifen, wirken erwartungsgemäß nicht gegen Bakteriosen. Eine Bekämpfung ist daher bisher nur über den Einsatz von Antibiotika (z.B. Streptomycin, Blasticidin S oder Kasugamicin) möglich, was jedoch nur selten praktiziert wird: der großflächige Einsatz von Antibiotika in der Landwirtschaft ist umstritten, da bei diesen Antibiotika grundsätzlich die gleichen Wirkungsmechanismen zur Anwendung kommen wie gegen bakterielle Pathogene in der Human- und Tiermedizin. Somit können sie die Entwicklung von Resistenzen begünstigen. Zudem sind die Antibiotika wegen ihrer meist komplizierten Molekülstrukturen teuer und nur auf biotechnologischem Weg herzustellen.

Ein elegantes Prinzip würde daher die Nutzung bzw. Stimulation der pflanzeneigenen Abwehrkräfte darstellen.

In EP-A 420 803 ist die immunisierende Wirkung von Benzo-1,2,3-thiazolderivaten gegen verschiedene phytopathogene Mikroorganismen beschrieben. Aus WO-A 96/37493 ist eine ähnliche Wirkung von Pyridylthiazolen bekannt. Aber die Wirkung dieser Substanzen ist in vielen Fällen unzureichend.

Der vorliegenden Erfindung lag daher die Aufgabe zugrunde, ein Verfahren bereitzustellen, das breit anwendbar ist, nicht mit dem Instrumentarium gegen Bakteriosen bei Mensch und Tier interferiert, ökologisch und toxikologisch unbedenklich ist, die Pflanzen nicht schädigt und dennoch eine wirkungsvolle Immunisierung gegen Phytobakteriosen bewirkt.

Demgemäß wurde das eingangs definierte Verfahren gefunden. Die verwendeten Wirkstoffe sind als Fungizide und z.T. auch als Insektizide bekannt (EP-A 178 826; EP-A 253 213; WO-A 93/15046; WO-A 95/18789; WO-A 95/21153; WO-A 95/21154; WO-A 95/24396; WO-A 96/01256; WO-A 97/15552). Ergebnisse zu einer Stimulation des pflanzlichen "Immunsystems", die zu einer Resistenz gegen Bakteriosen führt, gab es bisher jedoch nicht.

Die gute Pflanzenverträglichkeit der Wirkstoffe der Formel I in den zur Bekämpfung von Pflanzenkrankheiten notwendigen Konzentrationen erlaubt eine Behandlung von oberirdischen Pflanzenteilen, wie auch eine Behandlung von Pflanz- und Saatgut und des Bodens.

In dem erfindungsgemäßen Verfahren wird der Wirkstoff entweder durch die Blattoberfläche oder durch die Wurzeln von der Pflanze aufgenommen und im Pflanzensaft in der ganzen Pflanze verteilt.

Daher tritt die Schutzwirkung nach Anwendung des erfindungsgemäßen Verfahrens nicht nur bei den Pflanzenteilen auf, die direkt besprüht wurden, sondern die Resistenz der ganzen Pflanze gegen Bakteriosen ist erhöht.

Bei einer bevorzugten Ausführungsform des Verfahrens werden die oberirdischen Pflanzenteile mit einer Formulierung des Wirkstoffs I behandelt.

Die Herstellung der in dem erfindungsgemäßen Verfahren verwendeten Wirkstoffe ist aus den eingangs zitierten Schriften bekannt. Für das erfindungsgemäße Verfahren werden Wirkstoffe mit den folgenden Bedeutungen der Substituenten, und zwar jeweils für sich allein oder in Kombination, besonders bevorzugt:

Besonders bevorzugt für das erfindungsgemäße Verfahren sind Wirkstoffe I, in denen Q für C(=CH-OCH₃)-COOCH₃, C(=N-OCH₃)-COOCH₃ oder N(-OCH₃)-COOCH₃ steht.

Bevorzugte Bedeutungen für B in Formel I sind Phenyl, Pyridyl, Pyrimidinyl, Triazolyl und Pyrazolyl.

Für das erfindungsgemäße Verfahren werden besonders die Wirkstoffe der Formeln II bis VIII besonders bevorzugt, in denen
- V: OCH₃ und NHCH₃, insbesondere OCH₃,
- Y: CH und N und
- T und Z: unabhängig voneinander CH und N bedeuten.

Bevorzugte Wirkstoffe der Formel I, in denen Q für N(-OCH₃)-COOCH₃ steht, sind die in den Schriften WO-A 93/15046 und WO-A 96/01256 beschriebenen Verbindungen.

Bevorzugte Wirkstoffe der Formel I, in denen Q für C(=CH-OCH₃)-COOCH₃ steht, sind die in den Schriften EP-A 178 826 und EP-A 278 595 beschriebenen Verbindungen.

Bevorzugte Wirkstoffe der Formel I, in denen Q für C(=N-OCH₃)-COOCH₃ steht, sind die in den Schriften EP-A 253 213 und.EP-A 254 426 beschriebenen Verbindungen.

Bevorzugte Wirkstoffe der Formel I, in denen Q für C(=N-OCH₃)-CONHCH₃ steht, sind die in den Schriften EP-A 398 692, EP-A 477 631 und EP-A 628 540 beschriebenen Verbindungen.

Bevorzugte Wirkstoffe der Formel I, in denen Q für C(=CH-CH₃)-COOCH₃ steht, sind die in den Schriften EP-A 280 185 und EP-A 350 691 beschriebenen Verbindungen.

Bevorzugte Wirkstoffe der Formel I, in denen A für -CH₂O-N=C(R¹)-B steht, sind die in den Schriften-EP-A 460 575 und EP-A 463 488 beschriebenen Verbindungen.

Bevorzugte Wirkstoffe der Formel I, in denen A für -O-B steht, sind die in den Schriften EP-A 382 375 und EP-A 398 692 beschriebenen Verbindungen.

Bevorzugte Wirkstoffe der Formel I, in denen A für -CH₂O-N=C(R¹)-C(R²)=N-OR³ steht, sind die in den Schriften WO-A 95/18789, WO-A 95/21153, WO-A 95/21154, WO-A 97/05103 und WO-A 97/06133 beschriebenen Verbindungen.

Insbesondere werden Wirkstoffe der Formel I bevorzugt, in denen Q für N(-OCH₃)-COOCH₃,
A für CH₂-O- und
B für 3-Pyrazolyl oder 1,2,4-Triazolyl steht, wobei B einen oder zwei Substituenten tragen kann ausgewählt aus der Gruppe
- Halogen, Methyl und Trifluormethyl und
- Phenyl und Pyridyl, insbesondere 2-Pyridyl, wobei diese Reste substituiert sind durch 1 bis 3 Reste R^{b}.

Diese Wirkstoffe werden durch die Formel II beschrieben, 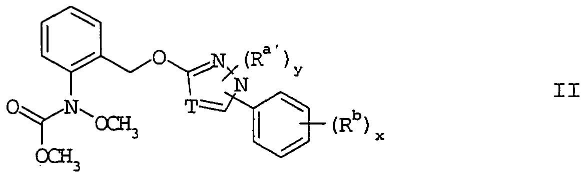 in der R^{a'} Chlor, Methyl oder Trifluormethyl, R^{b} die für Formel I gegebene Bedeutung hat und x 1 oder 2 und y 0 oder 1 bedeuten.

Insbesondere werden auch Wirkstoffe der Formel II' bevorzugt. 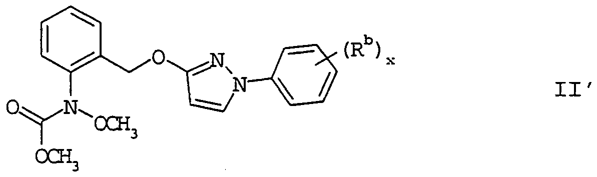 Ferner werden Wirkstoffe der Formel III 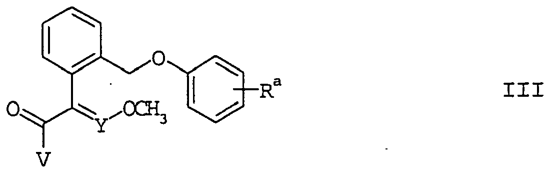 bevorzugt, in der V für OCH₃ oder NHCH₃ und Y für N stehen und R^{a} Halogen, C₁-C₄-Alkyl, C₁-C₄-Halogenalkyl oder C₁-C₄-Halogenalkoxy bedeuten.

Besonders bevorzugt sind Wirkstoffe der Formel III, in der V für OCH₃ steht und R^{a} für Halogen, Methyl, Dimethyl oder Trifluormethyl, insbesondere für Methyl steht.

Im Hinblick auf ihre Verwendung sind die in den folgenden Tabellen zusammengestellten Verbindungen besonders bevorzugt.

**Tabelle I**

| | | | | | |
|---|---|---|---|---|---|
| 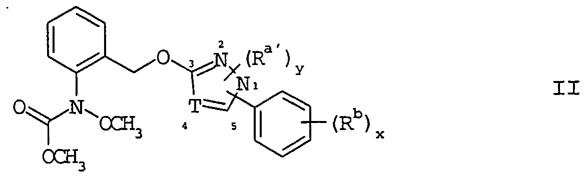 | | | | | |

| **Nr.** | **T** | **(R^{a'})_{y}** | **Position der Gruppe Phenyl-(R^{b})ₓ** | **(R^{b})ₓ** | **Literatur** |
|---|---|---|---|---|---|
| I-1 | N | - | 1 | 2,4-Cl₂ | WO-A 96/01256 |
| I-2 | N | - | 1 | 4-Cl | WO-A 96/01256 |
| I-3 | CH | - | 1 | 2-Cl | WO-A 96/01256 |
| I-4 | CH | - | 1 | 3-Cl | WO-A 96/01256 |
| I-5 | CH | - | 1 | 4-Cl | WO-A 96/01256 |
| I-6 | CH | - | 1 | 4-CH₃ | WO-A 96/01256 |
| I-7 | CH | - | 1 | H | WO-A 96/01256 |
| I-8 | CH | - | 1 | 3-CH₃ | WO-A 96/01256 |
| I-9 | CH | 5-CH₃ | 1 | 3-CF₃ | WO-A 96/01256 |
| I-10 | CH | 1-CH₃ | 5 | 3-CF₃ | WO-A 99/33812 |
| I-11 | CH | 1-CH₃ | 5 | 4-Cl | WO-A 99/33812 |
| I-12 | CH | 1-CH₃ | 5 | - | WO-A 99/33812 |

**Tabelle II**

| | | | | |
|---|---|---|---|---|
| 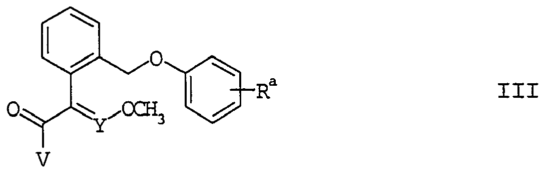 | | | | |

| **Nr.** | **V** | **Y** | **R^{a}** | **Literatur** |
|---|---|---|---|---|
| II-1 | OCH₃ | N | 2-CH₃ | EP-A 253 213 |
| II-2 | OCH₃ | N | 2,5-(CH₃)₂ | EP-A 253 213 |
| II-3 | NHCH₃ | N | 2,5-(CH₃)₂ | EP-A 477 631 |
| II-4 | NHCH₃ | N | 2-Cl | EP-A 477 631 |
| II-5 | NHCH₃ | N | 2-CH₃ | EP-A 477 631 |
| II-6 | NHCH₃ | N | 2-CH₃, 4-OCF₃ | EP-A 628 540 |
| II-7 | NHCH₃ | N | 2-Cl, 4-OCF₃ | EP-A 628 540 |
| II-8 | NHCH₃ | N | 2-CH₃, 4-OCH(CH₃)-C(CH₃)=NOCH₃ | EP-A 11 18 609 |
| II-9 | NHCH₃ | N | 2-Cl, 4-OCH(CH₃)-C(CH₃)=NOCH₃ | EP-A 11 18 609 |
| II-10 | NHCH₃ | N | 2-CH₃, 4-OCH(CH₃)-C(CH₂CH₃)=NOCH₃ | EP-A 11 18 609 |
| II-11 | NHCH₃ | N | 2-Cl, 4-OCH(CH₃)-C(CH₃)=NOCH₂CH₃ | EP-A 11 18 609 |

**Tabelle III**

| | | | | | |
|---|---|---|---|---|---|
| 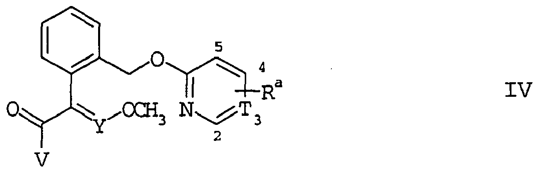 | | | | | |

| **Nr.** | **V** | **Y** | **T** | **R^{a}** | **Literatur** |
|---|---|---|---|---|---|
| III-1 | OCH₃ | CH | N | 2-OCH₃, 4-CF₃ | WO-A 96/16047 |
| III-2 | OCH₃ | CH | N | 2-OCH(CH₃)₂, 4-CF₃ | WO-A 96/16047 |
| III-3 | OCH₃ | CH | CH | 2-CF₃ | EP-A 278 595 |
| III-4 | OCH₃ | CH | CH | 3-CF₃ | EP-A 278 595 |
| III-5 | NHCH₃ | N | CH | 3-Cl | EP-A 398 692 |
| III-6 | NHCH₃ | N | CH | 3-CF₃ | EP-A 398 692 |
| III-7 | NHCH₃ | N | CH | 3-CF₃, 5-Cl | EP-A 398 692 |
| III-8 | NHCH₃ | N | CH | 3-Cl, 5-CF₃ | EP-A 398 692 |

**Tabelle IV**

| | | | | | |
|---|---|---|---|---|---|
| 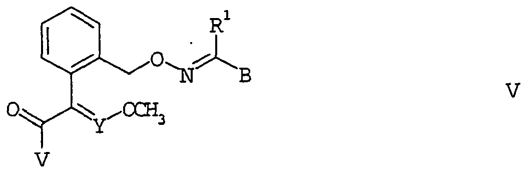 | | | | | |

| **Nr.** | **V** | **Y** | **R¹** | **B** | **Literatur** |
|---|---|---|---|---|---|
| IV-1 | OCH₃ | CH | CH₃ | (3-CF₃)C₆H₄ | EP-A 370 629 |
| IV-2 | OCH₃ | CH | CH₃ | (3,5-Cl₂)C₆H₃ | EP-A 370 629 |
| IV-3 | NHCH₃ | N | CH₃ | (3-CF₃)C₆H₄ | WO-A 92/13830 |
| IV-4 | NHCH₃ | N | CH₃ | (3-OCF₃)C₆H₄ | WO-A 92/13830 |
| IV-5 | OCH₃ | N | CH₃ | (3-OCF₃)C₆H₄ | EP-A 460 575 |
| IV-6 | OCH₃ | N | CH₃ | (3-CF₃)C₆H₄ | EP-A 460 575 |
| IV-7 | OCH₃ | N | CH₃ | (3, 4-Cl₂)C₆H₃ | EP-A 460 575 |
| IV-8 | OCH₃ | N | CH₃ | (3,5-Cl₂)C₆H₃ | EP-A 463 488 |

**Tabelle V**

| | | | | | |
|---|---|---|---|---|---|
| 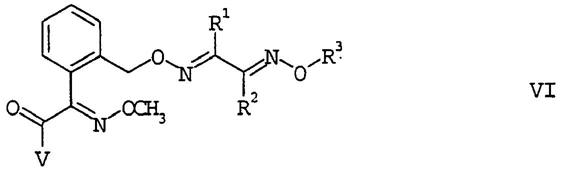 | | | | | |

| **Nr.** | **V** | **R¹** | **R²** | **R³** | **Literatur** |
|---|---|---|---|---|---|
| V-1 | OCH₃ | CH₃ | CH₃ | CH₃ | WO-A 95/18789 |
| V-2 | OCH₃ | CH₃ | CH(CH₃)₂ | CH₃ | WO-A 95/18789 |
| V-3 | OCH₃ | CH₃ | CH₂CH₃ | CH₃ | WO-A 95/18789 |
| V-4 | NHCH₃ | CH₃ | CH₃ | CH₃ | WO-A 95/18789 |
| V-5 | NHCH₃ | CH₃ | 4-F-C₆H₄ | CH₃ | WO-A 95/18789 |
| V-6 | NHCH₃ | CH₃ | 4-Cl-C₆H₄ | CH₃ | WO-A 95/18789 |
| V-7 | NHCH₃ | CH₃ | 2,4-Cl₂-C₆H₃ | CH₃ | WO-A 95/18789 |
| V-8 | NHCH₃ | Cl | 4-F-C₆H₄ | CH₃ | WO-A 98/38857 |
| V-9 | NHCH₃ | Cl | 4-Cl-C₆H₄ | CH₂CH₃ | WO-A 98/38857 |
| V-10 | NHCH₃ | CH₃ | CH₂C(=CH₂)CH₃ | CH₃ | WO-A 97/05103 |
| V-11 | NHCH₃ | CH₃ | CH=C(CH₃)₂ | CH₃ | WO-A 97/05103 |
| V-12 | NHCH₃ | CH₃ | CH=C(CH₃)₂ | CH₂CH₃ | WO-A 97/05103 |
| V-13 | NHCH₃ | CH₃ | CH=C(CH₃)CH₂CH₃ | CH₃ | WO-A 97/05103 |
| V-14 | NHCH₃ | CH₃ | O-CH(CH₃)₂ | CH₃ | WO-A 97/06133 |
| V-15 | NHCH₃ | CH₃ | O-CH₂CH(CH₃)₂ | CH₃ | WO-A 97/06133 |
| V-16 | NHCH₃ | CH₃ | C(CH₃)=NOCH₃ | CH₃ | WO-A 97/15552 |

**Tabelle VI**

| | | | | |
|---|---|---|---|---|
| 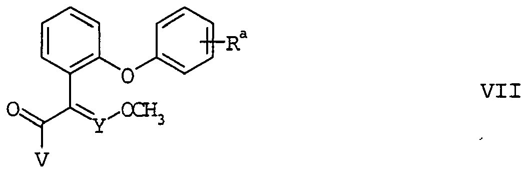 | | | | |

| **Nr.** | **V** | **Y** | **R^{a}** | **Literatur** |
|---|---|---|---|---|
| VI-1 | NHCH₃ | N | H | EP-A 398 692 |
| VI-2 | NHCH₃ | N | 3-CH₃ | EP-A 398 692 |
| VI-3 | NHCH₃ | N | 2-NO₂ | EP-A 398 692 |
| VI-4 | NHCH₃ | N | 4-NO₂ | EP-A 398 692 |
| VI-5 | NHCH₃ | N | 4-Cl | EP-A 398 692 |
| VI-6 | NHCH₃ | N | 4-Br | EP-A 398 692 |

**Tabelle VII**

| | | | | | |
|---|---|---|---|---|---|
| 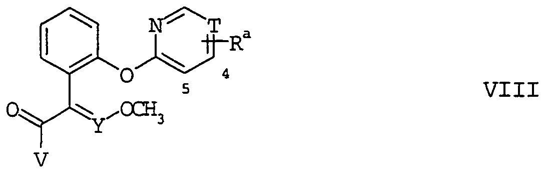 | | | | | |

| **Nr.** | **V** | **Y** | **T** | **R^{a}** | **Literatur** |
|---|---|---|---|---|---|
| VII-1 | OCH₃ | CH | N | 4-O-(2-CN-C₆H₄) | EP-A 382 375 |
| VII-2 | OCH₃ | CH | N | 4-O-(2-Cl-C₆H₄) | EP-A 382 375 |
| VII-3 | OCH₃ | CH | N | 4-O-(2-CH₃-C₆H₄) | EP-A 382 375 |
| VII-4 | NHCH₃ | N | N | 4-O-(2-Cl-C₆H₄) | GB-A 22 53 624 |
| VII-5 | NHCH₃ | N | N | 4-O-(2,4-Cl₂-C₆H₃) | GB-A 22 53 624 |
| VII-6 | NHCH₃ | N | N | 4-O-(2-CH₃-C₆H₄) | GB-A 22 53 624 |
| VII-7 | NHCH₃ | N | N | 4-O-(2-CH₃,3-Cl-C₆H₃) | GB-A 22 53 624 |
| VII-8 | NHCH₃ | N | N | 4-O-(2-CH₃-C₆H₄), 5-F | WO-A 98/21189 |
| VII-9 | NHCH₃ | N | N | 4-O-(2-Cl-C₆H₄), 5-F | WO-A 98/21189 |
| VII-10 | NHCH₃ | N | N | 4-O-(2-CH₃, 3-Cl-C₆H₃), 5-F | WO-A 98/21189 |
| VII-11 | NHCH₃ | N | N | 4-O-(2-Cl, 3-CH₃-C₆H₃), 5-F | WO-A 98/21189 |

Die Verbindungen I erhöhen die Resistenz von Pflanzen gegen Bakteriosen. Besondere Bedeutung haben sie für die Bekämpfung von Bakterien an verschiedenen Kulturpflanzen wie Gemüse, Obstgehözen und Tabak, sowie an den Samen dieser Pflanzen.

Speziell eignen sie sich zur Bekämpfung folgender Pflanzenkrankheiten:
*Pseudomona*-Arten an Tabak, Kartoffeln, Tomaten und Hülsenfrüchten und, insbesondere,
*Erwinia*-Arten an Obst, Gemüse und Kartoffeln.

Besonders eignen sich Verbindungen der Formel III, insbesondere Verbindung II-1, zur Bekämpfung von *Erwinia*-Arten.

Die Verbindungen I werden angewendet, indem man die vor Bakterienbefall zu schützenden Pflanzen, Saatgüter oder den Erdboden mit einer wirksamen Menge der Wirkstoffe behandelt. Die Anwendung erfolgt vor der Infektion der Pflanzen oder Samen durch die Bakterien. Hierdurch ist eine deutlich reduzierte Anfälligkeit der Pflanze gegen Bakteriosen zu verzeichnen.

Die Aufwandmengen liegen bei der Anwendung im Pflanzenschutz je nach Art des Erregers und der Pflanze zwischen 0,01 und 2,0 kg Wirkstoff pro ha.

Bei der Saatgutbehandlung werden im allgemeinen Wirkstoffmengen von 0,001 bis 0,1 g, vorzugsweise 0,01 bis 0,05 g je Kilogramm Saatgut benötigt.

Die Verbindungen I können in die für Fungizide üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen im wesentlichen die auch bei Fungiziden Üblichen in Betracht.

Die Formulierungen enthalten im allgemeinen zwischen 0,01 und 95 Gew.-%, vorzugsweise zwischen 0,1 und 90 Gew.-% des Wirkstoffs. Die Wirkstoffe werden dabei in einer Reinheit von 90% bis 100%, vorzugsweise 95% bis 100% (nach NMR-Spektrum) eingesetzt.

Beispiele für Formulierungen sind:
I. 5 Gew.-Teile einer erfindungsgemäßen Verbindung werden mit 95 Gew.-Teilen feinteiligem Kaolin innig vermischt. Man erhält auf diese Weise ein Stäubemittel, das 5 Gew.-% des Wirkstoffs enthält.
II. 30 Gew.-Teile einer erfindungsgemäßen Verbindung werden mit einer Mischung aus 92 Gew.-Teilen pulverförmigem Kieselsäuregel und8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit (Wirkstoffgehalt 23 Gew.-%).
III. 10 Gew.-Teile einer erfindungsgemäßen Verbindung werden in einer Mischung gelöst, die aus 90 Gew.-Teilen Xylol, 6 Gew.-Teilen des Anlagerungsproduktes von 8 bis 10 Mol Ethylenoxid an 1Mol Ölsäure-N-monoethanolamid, 2 Gew.-Teilen Calciumsalz der Dodecylbenzolsulfonsäure und 2 Gew.-Teilen des Anlagerungsproduktes von 40 Mol Ethylenoxid an 1 Mol Ricinusöl besteht (Wirkstoffgehalt 9 Gew.-%).
IV. 20 Gew.-Teile einer erfindungsgemäßen Verbindung werden in einer Mischung gelöst, die aus 60 Gew.-Teilen Cyclohexanon, 30 Gew.-Teilen Isobutanol, 5 Gew.-Teilen des Anlagerungsproduktes von 7 Mol Ethylenoxid an 1 Mol Isooctylphenol und 5Gew.-Teilen des Anlagerungsproduktes von 40 Mol Ethylenoxid an 1 Mol Ricinusöl besteht (Wirkstoffgehalt 16 Gew.-%).
V. 80 Gew.-Teile einer erfindungsgemäßen Verbindung werden mit 3 Gew.-Teilen des Natriumsalzes der Diisobutylnaphthalin-alpha-sulfonsäure, 10 Gew.-Teilen des Natriumsalzes einer Ligninsulfonsäure aus einer Sulfit-Ablauge und 7 Gew.-Teilen pulverförmigem Kieselsäuregel gut vermischt und in einer Hammermühle vermahlen (Wirkstoffgehalt 80 Gew.-%).
VI. Man vermischt 90 Gew.-Teile einer erfindungsgemäßen Verbindung mit 10 Gew.-Teilen N-Methyl-α-pyrrolidon und erhält eine Lösung, die zur Anwendung in Form kleinster Tropfen geeignet ist (Wirkstoffgehalt 90 Ges.-%).
VII. 20 Gew.-Teile einer erfindungsgemäßen Verbindung werden in einer Mischung gelöst, die aus 40 Gew.-Teilen Cyclohexanon, 30Gew.-Teilen Isobutanol, 20 Gew.-Teilen des Anlagerungsproduktes von 7 Mol Ethylenoxid an 1 Mol Isooctylphenol und 10 Gew.-Teilen des Anlagerungsproduktes von 40 Mol Ethylenoxid an 1 Mol Ricinusöl besteht. Durch Eingießen und feines Verteilen der Lösung in 100 000 Gew.-Teilen Wasser erhält man eine wäßrige Dispersion, die 0,02 Gew.-% des Wirkstoffs enthält.
VIII. 20 Gew.-Teile einer erfindungsgemäßen Verbindung werden mit 3 Gew.-Teilen des Natriumsalzes der Diisobutylnaphthalin-α-sulfonsäure, 17 Gew.-Teilen des Natriumsalzes einer Ligninsulfonsäure aus einer Sulfit-Ablauge und 60 Gew.-Teilen pulverförmigem Kieselsäuregel gut vermischt und in einer Hammermühle vermahlen. Durch feines Verteilen der Mischung in 20000 Gew.-Teilen Wasser erhält man eine Spritzbrühe, die 0,1 Gew.-% des Wirkstoffs enthält.

Wäßrige Anwendungsformen können üblicherweise aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind. Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Herbizide, andere Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Der Hinweis auf die Resistenzinduktionswirkung der Wirkstoffe I gegen Bakterien kann als Verpackungsaufdruck oder in Produktdatenblättern erfolgen. Der Hinweis kann auch bei Präparaten erfolgen, die mit den Wirkstoffen I in Kombination angewendet werden können.

Die Resistenzinduktion kann auch eine Indikation sein, die Gegenstand einer behördlichen Zulassung der Wirkstoffe I sein kann.

Die Wirkung der Verbindungen der Formel I ließ sich durch die folgenden Versuche zeigen:
Anwendungsbeispiele für die Resistenzinduktion gegen Bakterien

### Pflanzenmaterial

Für die Versuche wurden Tabakpflanzen (Nicotinia tabacum cv. Xanthi-nc) bei 25°C, 59% Luftfeuchte und einer täglichen Lichtperiode von 16 Stunden (150-200 µM Quanten/s⁻¹/m⁻²) für 6 bis 8 Wochen in Pikiererde (Einheitserde Typ ED 73) angezogen. Ein Teil der Pflanzen wurde einmal wöchentlich gedüngt, indem dem Gießwasser ein kommerzieller Blumendünger (10% Gesamtstickstoff, 9% Phosphat; 7% Kalium) in der empfohlenen Dosierung zugesetzt wurde.

### Wirkstoffapplikation

Der Wirkstoff wurde als 0,1 mM wässrige Lösung (Verdünnungen mit 1% v/v Dimethylsulfoxid [DMSO]) auf die Pflanzen gesprüht oder direkt mit Hilfe einer sehr dünnen Injektionskanüle in das Blattgewebe infiltriert. Die Kontrollpflanzen wurden mit wirkstofffreien Lösungen analog behandelt. Um den Einfluß biologischer Streuungen zu minimieren wurde in einigen Versuchen jeweils die Hälfte eines Blattes (links oder rechts von der Mittelrippe) mit Wirkstofflösung, die andere Hälfte des selben Blattes mit Kontrolllösungen behandelt.

Nach der Applikation und auch nach späterer Inokulation mit *Pseudomonas syringae* verblieben die Pflanzen in der Anzuchtkammer.

### Inokulation / Infektion und Resistenzbestimmung

Die wie voranstehend beschrieben mit Wirkstoff applizierten Tabakpflanzen bzw. -blätter wurden mit *Pseudomonas syringae pv. to*mato (strain DC3000; Herkunft: Brian Staskawicz, University of California, Berkeley, CA) oder *Pseudomonas syringae pv. tabaci* (Deutsche Sammlung von Mikroorganismen und Zellkulturen, Braunschweig, Deutschland), infiziert. Dazu wurden die Bakterien 1 Tag bei 30°C auf King's B Medium angezogen, zentrifugiert, gewaschen und in einer 10mM MgCl₂-Lösung auf eine Dichte von 10⁵ cfu ml⁻¹ eingestellt. Etwa 200 µl (2x10⁴ cfu ml⁻¹) dieses Inokulums wurden über kleine Blattverletzungen, die mit einer Kanüle gesetzt wurden, direkt in das Blattgewebe infiltriert.

In der folgenden Woche wurde die Ausprägung von Blattnekrosen als Folge der Infektion bestimmt. Das Ausbleiben nekrotischer Symptome ist dabei kennzeichnend für die induzierte Resistenz des Blattgewebes.

### Bestimmung des Bakterienwachstums

Zur Quantifizierung der Bakterienpopulation wurden je zwei Blattstücke (Ø 1 cm) aus infizierten Blattbereichen ausgestanzt und in 500 µL sterilem Wasser homogenisiert. Eine Verdünnungsreihe davon wurde auf King's B Agar ausplattiert und nach 2 Tagen Inkubation bei 30°C aus der Anzahl der gebildeten Kolonien die Dichte der Ausgangspopulation (cfu) pro Blattscheibe errechnet.

### Anwendungsbeispiel

Erhöhte Resistenz gegen *Pseudomonas syringae pv. tomato DC3000* (inkompatible Interaktion) und verzögerte Bildung von Krankheitssymptomen, hervorgerufen durch *Pseudomonas syringae pv. tabaci* (kompatible Interaktion) an Tabakblättern nach Behandlung mit Wirkstoff I-5.

### Beispiel 1: Immunisierung gegen Pseudomonas syringae pv. tabaci (kompatible Interaktion)

Durch die Applikation (24 bis 48 Stunden vor Inokulation) mit ≤ 0,01 %igen Zubereitung des Wirkstoffs I-5 wird im Falle einer kompatiblen Wirt-Pathogen-Kombination das Bakterienwachstum unterdrückt und die Ausbildung von Krankheitssymptomen vermindert.

Der Verlauf der Wachstumskinetik von *Pseudomonas syringae pv. ta*baci nach Animpfen von King B-Medium mit einer Kolonie zeigte in An-, bzw. Abwesenheit von Wirkstoff I-5, dass der Wirkstoff selbst keinen Einfluß auf das Bakterienwachstum in vitro hat.

Der beobachtete Effekt beruht daher auf einer Stimulation der pflanzeneigenen Abwehr bzw. Resistenz gegenüber dem Pathogen.

**Tabelle A: Wachstum von Pseudomonas syringae pv. tabaci in inokulierten Tabakblättern**

| Zeit [Std.] | Bakterien (x10⁶ Zellen/ml (Blattscheibe⁻¹) | |
|---|---|---|
| | Wirkstoff I-5 | Kontrolle |
| 0 | 0 | 0 |
| 16 | 0,3 | 0,3 |
| 24 | 1,2 | 3,3 |
| 48 | 1,4 | 3,7 |

### Beispiel 2: Immunisierung gegen Pseudomonas syringae pv. tomato DC3000 (inkompatible Interaktion)

Auch im Falle einer inkompatiblen Interaktion (d.h., die Pflanze reagiert von sich aus rasch auf eingedrungene Pathogene mit der Bildung von ("Abwehr"-)Nekrosen, bei der allerdings die infizierten Gewebsbereiche absterben, wird die Symptomausprägung stark verringert.

**Tabelle B: Befallsverlauf bei Tabakblättern nach Inokulation eines Interkostalfeldes mit Pseudomonas syringae pv. tomato DC3000**

| Zeit [Std.] | Blattveränderungen (Flächen-% des Interkostalfeldes) | | | |
|---|---|---|---|---|
| | Wirkstoff I-5 | | Kontrolle | |
| | Welkesymtome | Nekrosen | Welkesymtome | Nekrosen |
| 0 | 0 | 0 | 0 | 0 |
| 24 | 0 | 0 | 100 | 0 |
| 48 | 0 | 5 | - | 100 |
| 72 | 0 | 8 | - | 100 |
| 144 | 0 | 15 | - | 100 |
| 168 | 0 | 20 | - | 100 |

Nach Applikation der Zubereitung des Wirkstoffs I-5 beschränkten sich die wenigen nekrotisierten Bereiche direkt auf die Inokulationsstellen an den Blattverletzungen. Die Blätter der Kontrollpflanzen waren nach 24 Std. welk und nach 48 vollständig abgestorben.

## Patentansprüche

1. Verfahren zur Immunisierung von Pflanzen gegen Bakteriosen, **dadurch gekennzeichnet, daß** man die Pflanzen, den Boden oder Saatgüter mit einer wirksamen Menge einer Verbindung der Formel I, 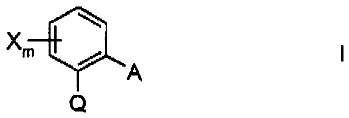 worin
X Halogen, C₁-C₄-Alkyl oder Trifluormethyl;
m 0 oder 1:
Q C(=CH-CH₃)-COOCH₃, C(=CH-OCH₃)-COOCH₃, C(=N-OCH₃)-CONHCH₃, C(=N-OCH₃)-COOCH₃ oder N(-OCH₃)-COOCH₃:
A -O-B, -CH₂O-B, -OCH₂-B. -CH=C_{H}-B, -C≡C-B, -CH₂O-N=C(R¹)-B oder -CH₂O-N=C(R¹)-C(R²)=N-OR³, wobei
B Phenyl, Naphthyl, 5-gliedriges oder 6-gliedrige Hetaryl oder 5-gliedriges oder 6-gliedriges Heterocyclyl, enthaltend ein bis drei N-Atome und/oder ein O- oder S-Atom oder ein oder zwei O- und/oder S-Atome, wobei die Ringsysteme unsubstituiert oder substituiert sind durch einen bis drei Reste R^{a}:
R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-Alkylamino, C₁-C₆-Alkylaminocarbonyl, Di-C₁-C₆-Alkylaminocarbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedrige Hetaryl, 5- oder 6-gliedriges Hetaryloxy, C(=NOR^{α})-OR^{β} oderOC(R^{α})₂-C(R^{β})=NOR^{β},
wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkoxycarbanyl, C₁-C₆-Alkylthio, C₁-C₆-Alkylamino, Di-C₁-C₆-alkylamino, C₁-C₆-Alkylamnocarbonyl, Di-C₁-C₆-alkylaminocarbonyl, C₁-C₆-Alkylaminothiocarbonyl, Di-C₁-C₆-alkylaminothio-carbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5- oder 6-gliedriges Hetaryl, 5- oder 6-gliedriges Hetaryloxy oder C(=NOR^{α} )-OR^{β};
R^{α}, R^{β} Wasserstoff oder C₁-C₆-Alkyl;
R¹ Wasserstoff, Cyano, C₁-C₄-Alkyl, C₁-C₄-Halogenalkyl, C₃-C₆-Cycloalkyl, C₁-C₄-Alkoxy;
R² Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a}; C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(R^{α} )=NOR^{β}, wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆- Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl Di-C₁-C₆-alkylaminothiocarbonyl, C₂-C₆-Alkenyl, C₂-C₆-Alkenyloxy,
C₃-C₆-Cycloalkyl, C₃-C₆-Cycloalkyloxy, 5- oder 6-gliedriges Heterocydyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
R³ Wasserstoff,
C₁-C₆-Alkyl, C₂-C₆-Alkenyl, C₂-C₆-Alkinyl, wobei die Kohlenwasserstoffreste dieser Gruppen unsubstituiert oder substituiert sind durch einen bis drei Reste R^{c};
behandelt, die von den Pflanzen oder Saatgütem aufgenommen wird.

2. Verfahren nach Anspruch 1, wobei ein Wirkstoff der Formel I verwendet wird, in dem Q für C(=CH-OCH₃)-COOCH₃, C(=N-OCH₃)-COOCH₃ oder N(-OCH₃)-COOCH₃ steht.

3. Verfahren nach Ansprüchen 1 oder 2, wobei der Index m Null bedeutet und die Substituenten in Formel I folgende Bedeutung haben:
A -O-B, -CH₂O-B, -CH₂O-N=C(R¹)-B oder CH₂-O-N=C(R¹)-C(R²)=N-OR³;
B Phenyl, Pyridyl, Pyrimidinyl, Pyrazolyl, Triazolyl, wobei diese Ringsysteme substituiert sind durch einen oder zwei Reste R^{a};
R² C₁-C₆-Alkyl, C₂-C₁₀-Alkenyl, C₃-C₆-Cycloalkyl, wobei diese Gruppen unsubstituiert oder substituiert sind durch einen oder zwei Reste R^{b'};
R^{b'} C₁-C₆-Alkyl, C₃-C₆-Cycloalkyl, C₁-C₆-Alkoxy, C₁-C₆-Halogenalkoxy, Benzyl, Phenyl oder Phenoxy;
oder Phenyl, das unsubstituiert oder substituiert ist durch ein oder zwei Reste R^{a}; und
R³ C₁-C₆-Alkyl, C₂-C₁₀-Alkenyl oder C₂-C₁₀-Alkinyl.

4. Verfahren nach Ansprüchen 1 bis 3, wobei ein Wirkstoff der Formel II 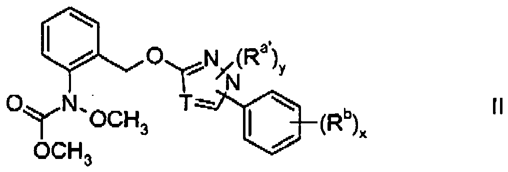 in der T ein Kohlenstoff oder ein Stickstoffatom, R^{a'} Chlor, Methyl oder Trifluormethyl, R^{b} die für Formel I gegebene Bedeutung hat und x 1 oder 2 und y Null oder 1 bedeuten, verwendet wird.

5. Verfahren nach Anspruch 4, wobei ein Wirkstoff der Formel II verwendet wird, in der T für CH und R^{b} für Cl steht sowie x 1 und y Null bedeutet.

6. Verfahren nach Ansprüchen 1 bis 3, wobei ein Wirkstoff der Formel III 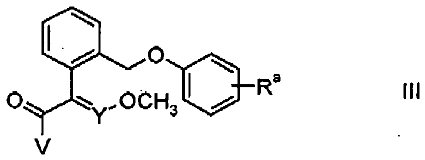 verwendet wird, in der V für OCH₃, Y für N und R^{a} für Methyl oder Dimethyl steht.

7. Verfahren nach Anspruch 6, wobei ein Wirkstoff der Formel III verwendet wird, in der R^{a} für Methyl steht.

8. Verfahren nach Ansprüchen 1 bis 7 zur Immunisierung gegen *Erwinia*- Arten.

9. Verfahren nach Ansprüchen 1 bis 8, wobei die Pflanzen behandelt werden.

10. Verfahren nach Ansprüchen 1 bis 8, wobei die Saatgüter behandelt werden.

11. Verwendung der Verbindungen der Formel 1, II oder III gemäß der Anspn3che 1 bis 7 zur Immunisiervng von Pflanzen gegen Bakteriosen.

## Claims

1. A method for immunizing plants against bacterioses, which comprises treating the plants, the soil or the seeds with an effective amount of a compound of the formula I, 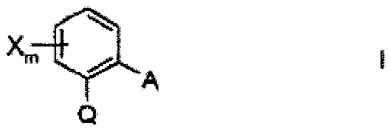 in which
X is halogen, C₁-C₄-alkyl or trifluoromethyl;
m is 0 or 1;
Q is C(=CH-CH₃) -COOCH₃, C(=CH-OCH₃)-COOCH₃, C(=N-OCH₃)-CONHCH₃, C(=N-OCH₃) -COOCH₃ or N(-OCH₃)-COOCH₃;
A is -O-B, -CH₂O-B, -OCH₂-B, -CH=CH-B, -C=C-B, - CH₂O- (R¹) -B or -CH₂O-N=C(R¹)-C(R²)=N-OR³, where
B is phenyl, naphthyl, 5-membered or 6-membered hetaryl or 5-membered or 6-membered heterocyclyl, comprising one to three N atoms and/or one O or S atom or one or two O and/or
S atoms, the ring systems being unsubstituted or substituted by one to three radicals R^{a}:
R^{a} being cyano, nitro, amino, aminocarbonyl, aminothiocarbonyl, halogen, C₁-C₆-alkyl, C₁-C₆-halogenalkyl, C₁-C₆-alkylcarbonyl, C₁-C₆-alkylsulfonyl, C₁-C₆-alkylsulfoxyl, C₃-C₆-cycioalkyl, C₁-C₆-alkoxy, C₁-C₆-halogenalkoxy, C₁-C₆-alkyloxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, phenyl, phenoxy, benzyl, benzyloxy, 5- or 6-membered heterocyclyl, 5- or 6-membered hetaryl, 5- or 6-membered hetaryloxy, C(=NOR^{α})-OR^{β} or OC(R^{α})₂-C(R^{β}) =NOR^{β},
the cyclic radicals, in turn, being unsubstituted or substituted by one to three radicals R^{b}: R^{b} being cyano, nitro, halogen, amino, aminocarbonyl, aminothiocarbonyl, C₁-C₆-alkyl, C₁-C₆-halogenalkyl, C₁-C₆-alkylsulfonyl, C₁-C₆-alkylsulfoxyl, C₃-C₆-cycloalkyl, C₁-C₆-alkoxy, C₁-C₆-halogenalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁- C₆-alkylaminothiocarbonyl, C₂-C₆-alkenyl, C₂-C₆-alkenyloxy, C₃-C₆-cycloalkyl, C₃-C₆-cycloalkenyl, phenyl, phenoxy, phenylthio, benzyl, benzyloxy, 5- or 6-membered heterocyclyl, 5- or 6-membered hetaryl, 5-or 6-membered hetaryloxy or C(=NOR^{α}) -OR^{β};
R^{α}, R^{β} being hydrogen or C₁-C₆-alkyl;
R¹ is hydrogen, cyano, C₁-C₄-alkyl, C₁-C₄-halogenalkyl, C₃-C₆-cyclcalkyl, C₁-C₄-alkoxy;
R² is phenyl, phenylcarbonyl, phenylsulfonyl, 5- or 6-membered hetaryl, 5- or 6-membered hetarylcarbonyl or 5- or 6-membered hetarylsulfonyl, the ring systems being unsubstituted or substituted by one to three radicals R^{a}; C₁-C₁₀-alkyl, C₃-C₆-cycloalkyl, C₂-C₁₀-alkenyl, C₂-C₁₀-alkynyl, C₁-C₁₀-alkylcarbonyl, C₂-C₁₀-alkenylcarbonyl, C₃-C₁₀-alkynylcarbonyl, C₁-C₁₀-alkylsulfonyl, or C(R^{α}) =NOR^{β}, the hydrocarbon radicals of these groups being unsubstituted or substituted by one to three radicals R^{c}:
R^{c} being cyano, nitro, amino, aminocarbonyl, aminothiocarbonyl, halogen, C₁-C₆-alkyl, C₁-C₆-haiogenalkyl, C₁-C₆-alkylsulfonyl, C₁-C₆- alkylsulfoxyl, C₁-C₆-alkoxy, C₁-C₆-halogenalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy,
C₃-C₆-cycloalkyl, C₃-C₆-cycloalkyloxy, 5- or 6-membered heterocyclyl, 5- or 6-membered heterocyclyloxy, benzyl, benzyloxy, phenyl, phenoxy, phenylthio, 5- or 6-membered hetaryl, 5- or 6-membered hetaryloxy and hetarylthio, it being possible for the cyclic groups, in turn, to be partially or fully halogenated or to have attached to them one to three radicals R^{a}; and
R³ is hydrogen,
C₁-C₆-alkyl, C₂-C₆-alkenyl, C₂-C₆-alkynyl, the hydrocarbon radicals of these groups being unsubstituted or substituted by one to three radicals R^{c};
which is taken up by the plants or seeds.

2. The method according to claim 1, wherein an active ingredient of the formula I, in which Q is C(=CH-OCH₃)-COOCH₃, C(=N-OCH₃)-COOCH₃ or N(-OCH₃)-COOCH₃, is used.

3. The method according to claim 1 or 2, wherein the index m is zero and the substituents in formula I have the following meanings:
A is -O-B, -CH₂O-B, -CH₂O-n=C(R¹) -B or CH₂-ON=C (R¹) -C(R²) =N-OR³;
B is phenyl, pyridyl, pyrimidinyl, pyrazolyl, triazolyl, these ring systems being substituted by one or two radicals R^{a};
R² is C₁-C₆-alkyl, C₂-C₁₀-alkenyl, C₃-C₆-cycloalkyl, these groups being unsubstituted or substituted by one or two radicals R^{b'};
R^{b'} being C₁-C₆-alkyl, C₃-C₆-cycloalkyl, C₁-C₆-alkoxy, C₁-C₆-halogenalkoxy, benzyl, phenyl or phenoxy;
or phenyl, which is unsubstituted or substituted by one or two radicals R^{a}; and
R³ is C₁-C₆-alkyl, C₂-C₁₀-alkenyl or C₂-C₁₀-alkynyl.

4. The method according to any of claims 1 to 3, wherein an active ingredient of the formula II 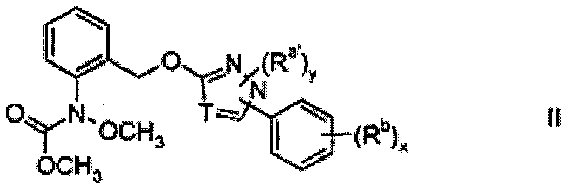 in which T is a carbon atom or a nitrogen atom, R^{a}' is chlorine, methyl or trifluoromethyl, R^{b} has the meaning given for formula I and x is 1 or 2 and y is zero or 1, is used.

5. The method according to claim 4, wherein an active ingredient of the formula II in which T is CH and R^{b} is Cl and x is 1 and y is zero is used.

6. The method according to any of claims 1 to 3, wherein an active ingredient of the formula III 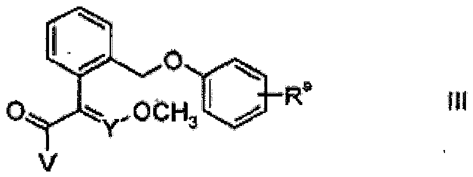 in which V is OCH₃, Y is N and R^{a} is methyl or dimethyl, is used.

7. The method according to claim 6, wherein an active ingredient of the formula III in which R^{a} is methyl is used.

8. The method according to any of claims 1 to 7 for immunizing against Erwinia species.

9. The method according to any of claims 1 to 8, wherein the plants are treated.

10. The method according to any of claims 1 to 8, wherein the seeds are treated.

11. The use of a compound of the formula I, II or III according to any of claims 1 to 7 for immunizing plants against bacterioses.

## Revendications

1. Procédé pour l'immunisation de végétaux contre des bactérioses, **caractérisé en ce qu'**on traite les végétaux, le sol ou des semences par une quantité efficace d'un composé de formule I, 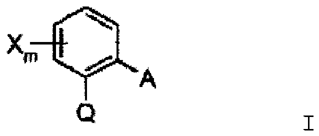 dans laquelle
X représente un atome d'halogène, un groupe alkyle en C₁-C₄ ou trifluorométhyle ;
m est 0 ou 1 ;
Q représente C(=CH-CH₃)-COOCH₃, C(=CH-OCH₃)-COOCH₃, C(=N-OCH₃)-CONHCH₃, C(=N-OCH₃)-COOCH₃ ou N(-OCH₃)-COOCH₃ ;
A représente -O-B, -CH₂O-B, -OCH₂-B, -CH=CH-B, -C≡ 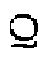 C-B, -CH₂O-N=C(R¹)-B ou -CH₂O-N=C(R¹)-C(R²)=N-OR³, où
B représente un groupe phényle, naphtyle, hétéroaryle à 5 chaînons ou 6 chaînons, ou hétérocyclyle à 5 chaînons ou 6 chaînons, contenant un à trois atomes d'azote et/ou un atome d'oxygène ou de soufre ou un ou deux atomes d'oxygène et/ou de soufre, les systèmes cycliques étant non substitués ou substitués par un à trois radicaux R^{a} ;
R^{a} représente un groupe cyano, nitro, amino, aminocarbonyle, aminothiocarbonyle, un atome d'halogène, un groupe alkyle en C₁-C₆, halogénoalkyle en C₁-C₆, alkyl(C₁-C₆) carbonyle, alkyl(C₁-C₆)sulfonyle, alkyl(C₁-C₆)-sulfoxy, cycloalkyle en C₃-C₆, alcoxy en C₁-C₆, halogénoalcoxy en C₁-C₆, alkyloxy(C₁-C₆) carbonyle, alkyl (C₁-C₆) - thio, alkyl(C₁-C₆) amino, dialkyl(C₁-C₆)-amino, alkyl(C₁-C₆)aminocarbonyle, dialkyl(C₁-C₆)aminocarbonyle, alkyl(C₁-C₆)aminothiocarbonyle, dialkyl(C₁-C₆)aminothiocarbonyle, alcényle en C₂-C₆, alcényl(C₂-C₆)oxy, phényle, phénoxy, benzyle, benzyloxy, hétérocyclyle à 5 ou 6 chaînons, hétéroaryle à 5 ou 6 chaînons, hétéroaryloxy à 5 ou 6 chaînons, C(=NOR^{α})-OR^{β} ou OC(R^{α})₂-C(R^{β})=NOR^{β}, les radicaux cycliques étant pour leur part non substitués ou substitués par un à trois radicaux R^{b}:
R^{b} représente un groupe cyano, nitro, un atome d'halogène, un groupe amino, aminocarbonyle, aminothiocarbonyle, alkyle en C₁-C₆, halogénoalkyle en C₁-C₆, alkyl(C₁-C₆)sulfonyle, alkyl(C₁-C₆)-sulfoxy, cycloalkyle en C₃-C₆, alcoxy en C₁-C₆, halogénoalcoxy en C₁-C₆, alcoxy(C₁-C₆) carbonyle,alkyl(C₁-C₆)thio, alkyl (C₁-C₆) amino, dialkyl(C₁-C₆)amino, alkyl(C₁-C₆) - aminocarbonyle, dialkyl(C₁-C₆)-aminocarbonyle, alkyl (C₁-C₆) aminothiocarbonyle, dialkyl(C₁-C₆)aminothiocarbonyle, alcényle en C₂-C₆, alcényl (C₂-C₆) oxy, cycloalkyle en C₃-C₆, cycloalcényle en C₃-C₆, phényle, phénoxy, phénylthio, benzyle, benzyloxy, hétérocyclyle à 5 ou 6 chaînons, hétéroaryle à 5 ou 6 chaînons, hétéroaryloxy à 5 ou 6 chaînons ou C(=NOR^{α})-OR^{β};
R^{α}, R^{β} représentant un atome d'hydrogène ou un groupe alkyle en C₁-C₆;
R¹ représente un atome d'hydrogène, un groupe cyano, alkyle en C₁-C₄, halogénoalkyle en C₁-C₄, cycloalkyle en C₃-C₆, alcoxy en C₁-C₄ ;
R² représente un groupe phényle, phénylcarbonyle, phénylsulfonyle, hétéroaryle à 5 ou 6 chaînons, hétéroarylcarbonyle à 5 ou 6 chaînons ou hétéroarylsulfonyle à 5 ou 6 chaînons, les systèmes cycliques étant non substitués ou substitués par un à trois radicaux R^{a} ;
un groupe alkyle en C₁-C₁₀, cycloalkyle en C₃-C₆, alcényle en C₂-C₁₀, alcynyle en C₂-C₁₀, alkyl(C₁-C₁₀)carbonyle, alcényl(C₂-C₁₀)-carbonyle, alcynyl(C₃-C₁₀)carbonyle, alkyl(C₁-C₁₀)sulfonyle, ou C(R^{α})=NOR^{β}, les radicaux hydrocarbonés de ces groupes étant non substitués ou substitués par un à trois radicaux R^{c}:
R^{c} représente un groupe cyano, nitro, amino, aminocarbonyle, aminothiocarbonyle, un atome d'halogène, un groupe alkyle en C₁-C₆, halogénoalkyle en C₁-C₆, alkyl(C₁-C₆)sulfonyle, alkyl(C₁-C₆)sulfoxy, alcoxy en C₁-C₆, halogénoalcoxy en C₁-C₆, alcoxy(C₁-C₆)carbonyle, alkyl(C₁-C₆)thio, alkyl(C₁-C₆)amino, dialkyl(C₁-C₆)amino, alkyl(C₁-C₆)aminocarbonyle, dialkyl (C₁-C₆) aminocarbonyle, alkyl(C₁-C₆)aminothiocarbonyle, dialkyl (C₁-C₆) aminothiocarbonyle, alcényle en C₂-C₆, alcényl(C₂-C₆)oxy,
cycloalkyle en C₃-C₆, cycloalkyl(C₃-C₆)-oxy, hétérocyclyle à 5 ou 6 chaînons, hétérocyclyloxy à 5 ou 6 chaînons, benzyle, benzyloxy, phényle, phénoxy, phénylthio, hétéroaryle à 5 ou 6 chaînons, hétéroaryloxy à 5 ou 6 chaînons et hétéroarylthio, les groupes cycliques pouvant pour leur part être partiellement ou totalement halogénés ou pouvant porter un à trois radicaux R^{a} ; et
R³ représente un atome d'hydrogène, un groupe alkyle en C₁-C₆, alcényle en C₂-C₆, alcynyle en C₂-C₆, les radicaux hydrocarbonés de ces groupes étant non substitués ou substitués par un à trois radicaux R^{c} ;
qui sont absorbés par les végétaux ou les semences.

2. Procédé selon la revendication 1, dans lequel on utilise une substance active de formule I, dans laquelle Q représente C(=CH-OCH₃)-COOCH₃, C(=N-OCH₃)-COOCH₃ ou N(-OCH₃)-COOCH₃ ;

3. Procédé selon la revendication 1 ou 2, dans lequel l'indice m représente zéro et les substituants dans la formule I ont la signification suivante :
A représente -O-B, -CH₂O-B, -CH₂O-N=C(R¹)-B ou CH₂O-N=C(R¹)-C(R²)=N-OR³;
B représente un groupe phényle, pyridyle, pyrimidinyle, pyrazolyle, triazolyle, ces systèmes cycliques étant non substitués ou substitués par un ou deux radicaux R^{a} ;
R² représente un groupe alkyle en C₁-C₆, alcényle en C₂-C₁₀, cycloalkyle en C₃-C₆, ces groupes étant non substitués ou substitués par un ou deux radicaux R^{b'};
R^{b'} représente un groupe alkyle en C₁-C₆, cycloalkyle en C₃-C₆, alcoxy en C₁-C₆, halogénoalcoxy en C₁-C₆, benzyle, phényle ou phénoxy ;
ou phényle qui est non substitué ou substitué par un ou deux radicaux R^{a} ; et
R³ représente un groupe alkyle en C₁-C₆, alcényle en C₂-C₁₀ ou alcynyle en C₂-C₁₀.

4. Procédé selon les revendications 1 à 3, dans lequel on utilise une substance active de formule II 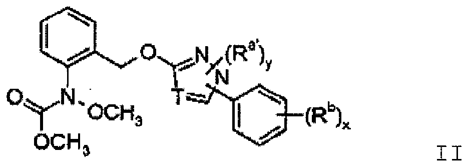 dans laquelle T représente un atome de carbone ou un atome d'azote, R^{a'} représente un atome de chlore, le groupe méthyle ou trifluorométhyle, R^{b} a la signification donnée pour la formule I et x représente 1 ou 2 et y représente zéro ou 1.

5. Procédé selon la revendication 4, dans lequel on utilise une substance active de formule II, dans laquelle T représente CH et R^{b} représente Cl ainsi que x représente 1 et y représente zéro.

6. Procédé selon les revendications 1 à 3, dans lequel on utilise une substance active de formule III 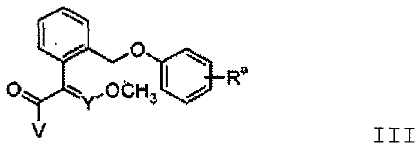 dans laquelle V représente OCH₃, Y représente N et R^{a} représente le groupe méthyle ou diméthyle.

7. Procédé selon la revendication 6, dans lequel on utilise une substance active de formule III, dans laquelle R^{a} représente le groupe méthyle.

8. Procédé selon les revendications 1 à 7, pour l'immunisation contre des espèces appartenant au genre *Erwinia.*

9. Procédé selon les revendications 1 à 8, dans lequel on traite les végétaux.

10. Procédé selon les revendications 1 à 8, dans lequel on traite les semences.

11. Utilisation des composés de formule I, II ou III selon les revendications 1 à 7, pour l'immunisation de végétaux contre des bactérioses.
